Europäisches Patentamt

European Patent Office

Office européen des brevets

(19)

(11) Veröffentlichungsnummer: **0 026 356**
**B1**

(12) **EUROPÄISCHE PATENTSCHRIFT**

(45) Veröffentlichungstag der Patentschrift:
**12.01.83**

(21) Anmeldenummer: **80105300.0**

(22) Anmeldetag: **04.09.80**

(51) Int. Cl.³: **H 02 H 1/06,** H 02 H 3/16,
H 02 H 3/34, H 02 M 7/04

(54) Schaltungsanordnung, insbesondere für mehrpolige Fehlerstromschutzschalter.

(30) Priorität: **20.09.79 DE 2937948**

(43) Veröffentlichungstag der Anmeldung:
**08.04.81 Patentblatt 81/14**

(45) Bekanntmachung des Hinweises auf die Patenterteilung:
**12.01.83 Patentblatt 83/2**

(84) Benannte Vertragsstaaten:
**AT FR GB IT NL**

(56) Entgegenhaltungen:
**DE-B-2 653 453**

**SIEMENS DATENBUCH 1973/1974 München «Selen-Kleingleichrichter und -Dioden» Seiten 20; Fig. 24**

(73) Patentinhaber: **SIEMENS AKTIENGESELLSCHAFT**
**Berlin und München, Postfach 22 02 61,**
**D-8000 München 22 (DE)**

(72) Erfinder: **Westermayer, Rudolf, Dipl.-Ing., Rennweg 4 g,**
**D-8400 Regensburg (DE)**

Schaltungsanordnung, insbesondere für mehrpolige Fehlerstromschutzschalter

Die Erfindung bezieht sich auf eine Schaltungsanordnung, insbesondere für mehrpolige Fehlerstromschutzschalter, die mit einer über Gleichrichterelemente abgeleiteten Hilfsspannung arbeiten, wobei zwei Gleichrichterstrecken für einen Netzleiter vorgesehen sind. Eine bekannte Schaltungsanordnung dieser Art arbeitet mit zwei Gleichrichterstrecken für jeden der Netzleiter, so dass insgesamt bei drei Aussenleitern – früher als Phasenleiter bezeichnet – und einem Neutralleiter – früher als Nulleiter bezeichnet – acht Gleichrichterstrecken benötigt werden (DE-B-26 53 453). Die Gleichrichterstrecken sind in Brückenschaltung angeordnet und an ihren Verbindungspunkten lässt sich die Hilfsspannung abgreifen.

Die bekannte Schaltungsanordnung liefert die Hilfsspannung so lange, wie zwei von vier Leitern intakt sind. Die Gleichrichterstrecken sind jedoch, wirtschaftlich gesehen, verhältnismässig aufwendige Bauteile.

Der Erfindung liegt die Aufgabe zugrunde, eine Schaltungsanordnung zur sicheren Versorgung von Fehlerstromschutzschaltern, die mit einer Hilfsspannung arbeiten, zu entwickeln, die mit weniger als acht Gleichrichterstrecken auskommt.

Die Lösung der geschilderten Aufgabe besteht darin, dass zumindest mit einem der Verbindungspunkte (3) der Neutralleiter (N) über einen Kondensator oder über einen Kondensator und einen Wirkwiderstand in Reihenschaltung verbunden ist. Eine solche Schaltungsanordnung kommt mit sechs Gleichrichterstrecken aus.

Der Strombedarf in der Hilfsversorgung eines elektronisch arbeitenden Fehlerstromschutzschalters liegt in der Regel unterhalb von 2 mA und die Spannung ist von Spannungswerten herunterzutransformieren. Hierzu können zwischen den Gleichrichterstrecken und netzseitigen Anschlussstellen bei den Aussenleitern Widerstände eingeschaltet werden.

Anstelle der vorgeschalteten Widerstände kann man auch so vorgehen, dass zwischen dem Neutralleiter und den Verbindungspunkten Kondensatoren angeordnet sind und dass zwischen einem Verbindungspunkt und dem zugeordneten Ausgang der Schaltungsanordnung zumindest ein Widerstand angeordnet ist. Bei zwei Widerständen können diese zum Kondensator insbesondere in T-Schaltung angeordnet sein.

Die Erfindung soll anhand von in der Zeichnung schematisch wiedergegebenen Ausführungsbeispielen näher erläutert werden:

In Fig. 1 ist ein Ausführungsbeispiel dargestellt.
In Fig. 2 ist ein weiteres Ausführungsbeispiel wiedergegeben.

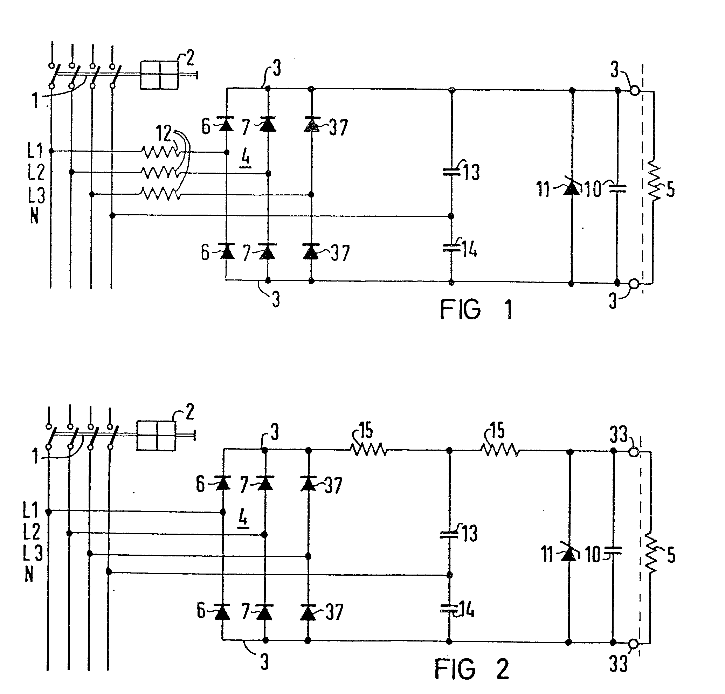

Die Schaltungsanordnung nach Fig. 1 ist an vier zu überwachenden Leitern, den Aussenleitern L1, L2, L3 und dem Neutralleiter N angeschlossen. In den zu überwachenden Leitern sind Schaltkontakte 1 angeordnet, auf die ein Schaltschloss 2 einwirkt. Dieses Schaltschloss 2 ist in einem Gehäuse eines Fehlerstromschutzschalters untergebracht vorzustellen. Durch den Fehlerstromschutzschalter, der für seinen Betrieb eine Hilfsspannung benötigt, sind die zu überwachenden Leiter hindurchgeführt. Die Hilfsspannung wird an den Verbindungspunkten 3 einer Brückenschaltung 4 abgegeben. Die Hilfsspannung arbeitet auf einen im Fehlerstromschutzschalter angeordnet vorzustellenden Verbraucher 5.

Jeweils zwei Gleichrichterstrecken 6 bzw. 7 bzw. 37 sind zu drei Aussenleitern L1, L2, L3 in an sich bekannter Brückenschaltung angeordnet. Jedoch ist zumindest mit einem ihrer Verbindungspunkte 3 der Neutralleiter N über eine Reaktanz verbunden. Die Kondensatoren 13 und 14 stellen dabei in der Praxis eine Verknüpfung von einem Blindwiderstand mit einem Wirkwiderstand dar. Die Hilfsspannung kann an den Verbindungspunkten 3 abgegriffen werden.

Zwischen den Verbindungspunkten 3 können übliche Glättungsmittel, im Ausführungsbeispiel ein Kondensator 10 und ein oberhalb einer Schwellspannung arbeitendes Ventil 11, z.B. eine Zenerdiode, angeordnet sein.

In der Schaltungsanordnung nach Fig. 2 werden die Reaktanzen durch einen der Widerstände 15, als Wirkwiderstand, und dem oberhalb der Verbindungsstelle mit dem Neutralleiter N angeordneten Kondensator 13 gebildet. Die Hilfsspannung kann an den zu den Verbindungspunkten 3 nachgeschalteten Stellen 33 abgegriffen werden.

Der zum Kondensator 13 auf der anderen Seite der Verbindungsstelle mit dem Neutralleiter angeordnete Kondensator 14 dient hauptsächlich zur Steuerung des Potentials.

**Patentansprüche**

1. Schaltungsanordnung, insbesondere für mehrpolige Fehlerstromschutzschalter, die mit einer über Gleichrichterelemente abgeleiteten Hilfsspannung arbeiten, wobei zwei Gleichrichterstrecken für einen Leiter vorgesehen sind, wobei jeweils zwei Gleichrichterstrecken (6; 7; 37) zu drei Phasenleitern in Brückenschaltung (4) angeordnet sind und an deren Verbindungspunkten (3) oder diesen nachgeordneten Stellen (33) die Hilfsspannung abgreifbar ist, dadurch gekennzeichnet, dass zumindest mit einem der Verbindungspunkte (3) der Neutralleiter (N) über einen Kondensator (13, 14) oder über einen Kondensator (13) und einen Wirkwiderstand (15) in Reihenschaltung verbunden ist.

2. Schaltungsanordnung nach Anspruch 1, dadurch gekennzeichnet, dass zwischen den Gleichrichterstrecken und den netzseitigen Anschlussstellen bei den Aussenleitern Widerstände (12) eingeschaltet sind.

3. Schaltungsanordnung nach Anspruch 1, dadurch gekennzeichnet, dass zwischen dem Neutralleiter (N) und den Verbindungspunkten (3) Kondensatoren (13, 14) angeordnet sind und dass zwischen einem Verbindungspunkt (3) und dem zugeordneten Ausgang (33) der Schaltungsanordnung zumindest ein Widerstand (15) angeordnet ist.

## Claims

1. Circuit arrangement, in particular for multipole earth fault current circuit breakers operating with an auxiliary voltage derived by means of rectifier elements, where two rectifier paths are provided for one conductor, where two rectifier paths (6; 7; 37) in each case are arranged in bridge connection (4) to three phase conductors and the auxiliary voltage is derivable at their points of connection (3) or points (33) following these, characterised in that the neutral conductor (N) is connected in series with at least one of the connection points (3) via a capacitor (13, 14) or via a capacitor (13) and an active resistance (15).

2. Circuit arrangement according to claim 1, characterised in that resistances (12) are inserted between the rectifier paths and the mains-side terminal points in the vicinity of the external conductors.

3. Circuit arrangement according to claim 1, characterised in that capacitors (13, 14) are arranged between the neutral conductor (N) and the points of connection (3), and in that at least one resistance (15) is arranged between a connection point (3) and the associated output (33) of the circuit arrangement.

## Revendications

1. Montage, notamment pour des disjoncteurs multipolaires de courant de fuite, qui fonctionne avec une tension auxiliaire dérivée par l'intermédiaire d'éléments redresseurs, deux voies de redressement étant prévus pour un conducteur, deux voies de redressement (6; 7; 37) étant respectivement montés en pont par rapport aux trois conducteurs de phase, et la tension auxiliaire pouvant être prélevée au niveau de leurs points de jonction (3) ou d'endroits (33) situés en aval de ceux-ci, caractérisé par le fait que le conducteur neutre (N) est monté en série au moins avec un des points de jonction (3), par l'intermédiaire d'un condensateur (13, 14) ou par l'intermédiaire d'un condensateur (13) et d'une résistance active (15).

2. Montage suivant la revendication 1, caractérisé par le fait qu'entre les voies de redressement et les points de raccordement, côté réseau, sont insérées des résistances (12) dans le cas des conducteurs extérieurs.

3. Montage suivant la revendication 1, caractérisé par le fait qu'entre le conducteur neutre (N) et les points de jonction (3) sont disposés des condensateurs (13, 14), et qu'entre un point de jonction (3) et la sortie associée (33) du montage est disposée au moins une résistance (15).

FIG 1

FIG 2